(19) **Europäisches Patentamt**

**European Patent Office**

**Office européen des brevets**

(11) Numéro de publication : **0 459 880 A1**

# (12) DEMANDE DE BREVET EUROPEEN

(21) Numéro de dépôt : **91401352.9**

(22) Date de dépôt : **27.05.91**

(51) Int. Cl.$^5$ : **G01R 31/318, G06F 7/38, G07C 3/00**

(30) Priorité : **29.05.90 FR 9006636**

(43) Date de publication de la demande :
**04.12.91 Bulletin 91/49**

(84) Etats contractants désignés :
**BE DE GB IT NL SE**

(71) Demandeur : **COMMISSARIAT A L'ENERGIE ATOMIQUE**
**31-33, rue de la Fédération**
**F-75015 Paris (FR)**

(72) Inventeur : **Jurvillier, Isabelle**
**31 rue Pasteur**
**F-21000 Dijon (FR)**
Inventeur : **Laviron, André**
**15 rue des Champs Viaux**
**F-21121 Daix (FR)**

(74) Mandataire : **Mongrédien, André et al**
**c/o BREVATOME 25, rue de Ponthieu**
**F-75008 Paris (FR)**

(54) **Dispositif pour la génération de combinaisons de valeurs numériques et procédé pour sa mise en oeuvre.**

(57) Dispositif pour la génération de combinaisons de valeurs numériques comprenant une première mémoire (10) où sont enregistrées à des adresses successives et dans un ordre déterminé des valeurs numériques.

Chaque valeur numérique lue est comparée par des moyens de comparaison (12, 14) à au moins un élément de comparaison pour la déduction d'une nouvelle valeur numérique qui est enregistrée à l'adresse de la valeur lue en mémoire (10).

Chaque nouvelle combinaison est donc déduite de la précédente selon un critère de calcul déterminé. La combinaison initiale est fournie par des moyens de commande (16, 18) à partir de données initiales.

Application à la génération de numéros de composants dans un circuit de simulation des défaillances d'un système complexe.

EP 0 459 880 A1

FIG. 1

La présente invention a pour objet un dispositif pour la génération de combinaisons de valeurs numériques et un procédé pour la mise en oeuvre du dispositif. Elle s'applique notamment à la génération de valeurs numériques représentant des composants en panne lors de la simulation de défaillances de dispositifs complexes.

Un simulateur logique permet l'étude des conséquences de la défaillance d'un ou plusieurs composants entrant dans la constitution de systèmes complexes, tels des dispositifs de sécurité. Il donne les combinaisons de composants défaillants qui entraînent la défaillance du système global.

Dans un simulateur, une valeur numérique est attribuée à chaque composant. Un générateur de combinaisons de valeurs numériques connecté à une entrée du simulateur délivre tour à tour toutes les combinaisons de valeurs numériques possibles à un ordre donné ; ces combinaisons correspondent aux composants en panne simultanément.

L'ordre de la combinaison est égal au nombre de composants défaillants pour une simulation donnée. Si le système global est constitué de N composants, $C_N^p = N!/(p!(N-p)!)$ combinaisons doivent être testées de l'ordre p. Par exemple, 40 composants pris 10 par 10 forment au total 847 660 528 combinaisons.

On conçoit que pour des systèmes complexes possédant un grand nombre de composants, il est impossible de stocker toutes les combinaisons dans la mémoire d'un ordinateur.

Le calcul de ces combinaisons par un ordinateur est une solution lente et coûteuse.

Actuellement, on connaît des générateurs de combinaisons de valeurs numériques réalisés à l'aide de registres à décalage particuliers. Ces générateurs sont constitués de nombreux circuits et forment des machines complexes délicates à réaliser.

La présente invention a pour but de permettre la réalisation d'un générateur de combinaisons de valeurs numériques simple à mettre en oeuvre et ne comportant que peu de composants.

Un autre but de l'invention est de permettre une génération de ces combinaisons de manière rapide et peu coûteuse.

L'invention préconise le stockage en mémoire d'une combinaison initiale et la déduction suivant un critère déterminé des valeurs de la combinaison suivante au fur et à mesure de la lecture des valeurs initiales. Les valeurs déduites sont écrites en mémoire en remplacement des valeurs initiales lues.

Chaque nouvelle combinaison est ensuite déduite de la précédente selon le même critère jusqu'à ce que toutes les combinaisons à un ordre donné aient été balayées.

De manière plus précise, la présente invention concerne un dispositif pour la génération de combinaisons de valeurs numériques. Ce dispositif comprend :

– une première mémoire apte à enregistrer des valeurs numériques rangées dans un ordre déterminé et un code de fin T à des adresses successives,
– un moyen pour engendrer des numéros de place attribuées aux valeurs numériques,
– des premiers moyens de comparaison aptes à comparer une valeur numérique lue en mémoire avec au moins un élément de comparaison pour déduire une nouvelle valeur numérique et apte à délivrer cette nouvelle valeur sur une sortie connectée à la première mémoire pour son écriture à l'adresse de la valeur lue,
– des moyens de commande pour la commande des écritures en mémoire, pour un enregistrement dans la première mémoire d'une combinaison initiale et pour la commande de la déduction de la nouvelle valeur numérique selon un critère de calcul déterminé.

Ainsi chaque nouvelle combinaison est déduite de la combinaison précédente au cours de la lecture de cette dernière. Le nombre de valeurs numériques à stocker n'excède pas le nombre total de valeurs d'une combinaison à un ordre donné.

De manière avantageuse, le moyen pour engendrer des numéros de place est une seconde mémoire comprenant des numéros de place enregistrés à des adresses successives, la succession de ces adresses correspondant à la succession des adresses des valeurs numériques en première mémoire.

L'enregistrement des valeurs numériques est ordonné ; d'autre part, les adresses des valeurs en mémoire sont successives et un numéro de place est attribué à chaque valeur. Les numéros de place sont aussi enregistrés dans une mémoire à des adresses successives. On peut ainsi relier chaque valeur à son numéro de place en faisant le lien entre les adresses.

Selon un mode de réalisation particulier, les valeurs numériques et le code fin étant enregistrés dans une première zone Z1 de la première mémoire, la seconde mémoire correspond à une seconde zone Z2 de la première mémoire.

Cela permet de simplifier la gestion du dispositif tout en réduisant le nombre de composants du dispositif.

De manière préférée, les premiers moyens de comparaison comprennent :
un registre apte à éventuellement incrémenter son contenu, ce registre étant connecté par une sortie à une première entrée d'un comparateur apte à comparer le contenu du registre à un élément de comparaison délivré sur une seconde entrée du comparateur et à délivrer un signal de comparaison sur une sortie connectée à une entrée des moyens de commande.

Selon un mode de réalisation particulier du dispositif, un premier élément de comparaison est constitué par une valeur numérique maximum et un second élément de comparaison est constitué par une valeur numérique enregistrée en première mémoire et ayant une adresse suivant celle de ladite valeur numérique lue.

De manière préférée, le dispositif comprend une troisième mémoire connectée par une sortie à une entrée des premiers moyens de comparaison et par des entrées à des sorties des moyens de commande et dans laquelle ladite valeur maximum est enregistrée à toutes les adresses.

Préférentiellement, cette troisième mémoire est une troisième zone Z3 de la première mémoire.

Cela permet de réduire le nombre de composants du dispositif.

Selon un mode particulier de réalisation, le dispositif comprend un second moyen de comparaison apte à comparer ladite valeur numérique lue audit code de fin et à délivrer sur une sortie connectée à une entrée des moyens de commande un signal de fin de combinaison.

Ce signal de fin de combinaison permet d'informer le système utilisateur des valeurs numériques que la lecture d'une combinaison est terminée et que l'on passe à la combinaison suivante.

Selon un mode préféré de réalisation, les premiers moyens de comparaison comprenant un registre, ledit second moyen de comparaison est constitué par ce registre.

Le dispositif permet le balayage des combinaisons possibles à n'importe quel ordre. Une fois toutes les combinaisons passées en revue un moyen de test d'un critère d'arrêt délivre un signal d'arrêt pour l'arrêt de la génération de combinaisons. Cela permet d'éviter la génération de combinaisons supplémentaires qui seraient des combinaisons comprenant des valeurs numériques non utiles, c'est-à-dire supérieures à la valeur maximum que l'on s'est fixée.

Selon un mode de réalisation particulier, la combinaison initiale est composée des p premières valeurs numériques possibles, p étant l'ordre de la combinaison.

De façon avantageuse, lesdits moyens de commande comprennent un processeur relié à un compteur.

Par processeur, on doit comprendre processeur muni de ses périphériques usuels et en particulier une horloge permettant la synchronisation de l'ensemble des éléments du dispositif. Préférentiellement, ces moyens de commande peuvent être une micromachine spécialisée classique permettant d'accélérer les diverses opérations. Le compteur délivre un signal d'adresse qui permet l'adressage de la mémoire.

La présente invention concerne aussi un procédé pour la mise en oeuvre du précédent dispositif. Le procédé consiste à :

A - préalablement, enregistrer dans une mémoire des valeurs numériques formant une combinaison initiale et un code de fin marquant la fin de la combinaison, les valeurs numériques étant enregistrées dans un ordre déterminé à des adresses successives, des numéros de place en mémoire étant attribués aux valeurs numériques,

B - lire les valeurs numériques dans l'ordre des places successives,

C - à chaque lecture d'une valeur numérique,

    a) déduire une nouvelle valeur numérique à partir du résultat d'une comparaison entre la valeur numérique lue et au moins un élément de comparaison,

    b) enregistrer la nouvelle valeur numérique à l'adresse de la valeur numérique lue,

D - à partir de la combinaison formée par la suite des valeurs numériques déduites en C, reprendre en B pour la formation d'une combinaison suivante.

De manière avantageuse, la nouvelle valeur numérique est déduite à partir d'une comparaison entre la valeur numérique lue et un élément de comparaison constitué par la valeur numérique enregistrée à l'adresse suivant celle de la valeur numérique lue ;

    1) si les valeurs comparées sont consécutives alors la nouvelle valeur numérique est égale à la place de la valeur numérique lue,

    2) sinon la nouvelle valeur numérique est égale à la valeur numérique lue augmentée de 1.

De manière avantageuse, on compare chaque valeur numérique lue à une valeur numérique maximum déterminée, si la valeur numérique lue est égale à la valeur numérique maximum, alors la génération de combinaisons est stoppée.

De manière préférée, lors de l'étape préalable A, à chaque valeur numérique, on attribue un numéro de place de valeur égale à la valeur numérique considérée.

Les caractéristiques et avantages de l'invention apparaîtront mieux après la description qui suit donnée à titre explicatif et nullement limitatif. Cette description se réfère à des dessins annexés sur lesquels :

    – la figure 1 représente schématiquement un dispositif conforme à l'invention,

    – la figure 2 est un organigramme présentant un procédé pour la mise en oeuvre dudit dispositif,

    – la figure 3 est un organigramme présentant une étape de déduction d'une nouvelle valeur numérique.

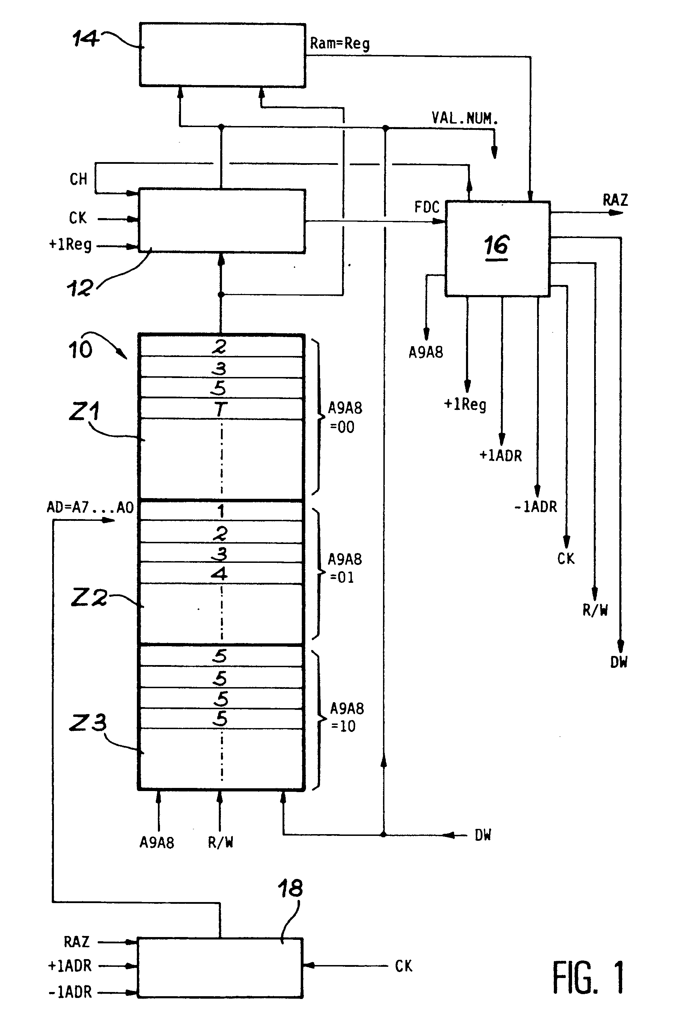

En référence à la figure 1, on décrit maintenant un exemple de réalisation d'un dispositif conforme à l'invention.

Le dispositif comprend trois mémoires du type mémoire à accès direct (RAM) ; ces trois mémoires sont en fait trois zones Z1, Z2, Z3 d'une mémoire 10 de type RAM dont les adresses sont par exemple codées sur 10 bits A9A8...A0.

Selon la valeur des deux bits supérieurs A9A8, quatre zones de mémoire sont définies ; seules trois de ces zones sont utilisées dans l'invention : la zone Z1 correspondant à A9A8 = 00 contient des valeurs numériques rangées dans un ordre défini, croissant dans cet exemple de réalisation et un code de fin T enregistrés à des adresses successives ; la zone Z2 correspondant à A9A8 = 01 contient, enregistrée à des adresses successives, des numéros de place dans la combinaison, attribués aux valeurs numériques enregistrées dans la zone Z1 ; la zone Z3 correspondant à A9A8 = 10 contient, enregistrée à toutes les adresses, une valeur numérique maximum qui est par exemple le nombre total de composant d'un système complexe dans le cas d'une simulation de défaillance.

Cette manière d'arranger les différentes zones de la mémoire permet de faire facilement le lien entre une valeur numérique de la zone Z1 et sa place dans la combinaison puisque les huit bits d'adresse A7...A0 de celle-ci sont identiques aux huit bits d'adresse A7...A0 de la valeur numérique considérée.

Des moyens de comparaison sont formés par un registre 12 constitué par exemple de trois circuits 74 LS 169 commercialisés par exemple par la Société Texas Instrument connectés en parallèle, et par un comparateur 14.

Une sortie de la mémoire 10 est connectée à une entrée du registre 12 et à une entrée du comparateur 14.

Une sortie du registre 12 est connectée à une seconde entrée du comparateur 14 et à une entrée de la mémoire 10.

Des moyens de commande connectés aux différents éléments du dispositif permettent de gérer le fonctionnement du système. Ces moyens de commande comprennent essentiellement un processeur 16, par exemple du type microprocesseur, muni de périphériques usuels, notamment une horloge (non représentée) et relié à un compteur 18 qui délivre un signal d'adresse AD sur une sortie connectée à une entrée de la mémoire 10. Ce signal d'adresse correspond aux bits A7-A0 de l'adresse.

Les bits A9A8 qui déterminent la zone d'adressage sont délivrés sur une sortie du processeur 16.

Le processeur 16 est aussi connecté à un ordinateur (non représenté) qui permet l'introduction de données préalablement au démarrage de la génération des combinaisons. Ces données sont par exemple la valeur maximum des valeurs numériques et la première combinaison de l'ordre en cours.

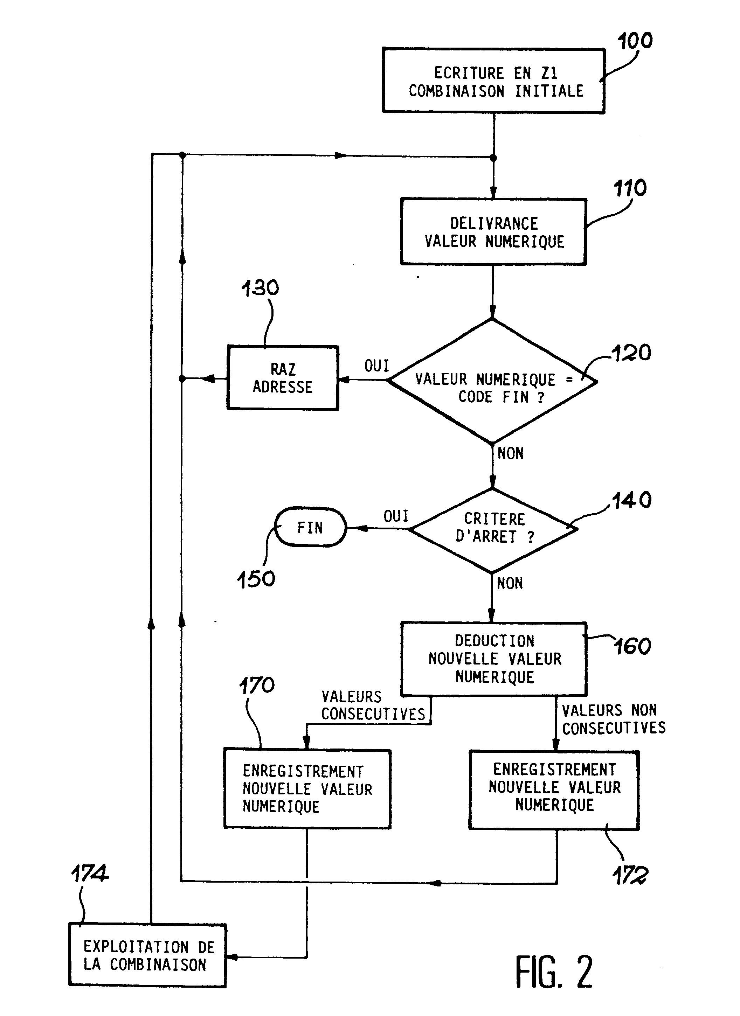

En référence aux figures 1 et 2, on va maintenant décrire la lecture d'une combinaison et la génération d'une nouvelle combinaison.

Les valeurs numériques d'une combinaison enregistrées en mémoire 10 sont lues les unes après les autres ; après chaque lecture, une nouvelle combinaison de valeurs numériques est déduite. Cette dernière prend la place en mémoire 10 de la combinaison de valeurs numériques qui vient d'être lue. Chaque combinaison de valeurs numériques peut être lue plusieurs fois avant la génération de la combinaison suivante.

Lors d'une étape préliminaire 100, à l'aide des données fournies par l'utilisateur, le processeur 16 détermine une combinaison initiale composée par exemple des p premières valeurs, dans l'ordre croissant. Cette combinaison est terminée par un code de fin T. T par exemple choisi égal à la plus grande valeur que puisse contenir le registre 12.

Pour fixer les idées, on peut citer l'exemple où la valeur maximum est 5 et l'ordre p de la combinaison choisi égal à 3. Dans ce cas, la combinaison initiale est 1,2,3.

La combinaison initiale suivie du code de fin est enregistrée selon l'ordre croissant dans la zone Z1 de la mémoire 10 à des adresses successives. Pour cela, le processeur 16 délivre successivement sur une sortie un signal DW constitué par les valeurs numériques à enregistrer. Il délivre aussi un signal d'horloge CK, le signal A9A8 précisant la zone à adresser et un signal d'incrémentation +1ADR. Les impulsions d'horloge CK successives ne modifient pas l'état du compteur 18. Par contre, un signal de commande tel que le signal +1ADR, ou des signaux tels que RAZ ou -1ADR reçu simultanément à CK permettent respectivement l'incrémentation du compteur 18, sa remise à zéro ou sa décrémentation.

Le compteur 18 délivre un signal d'adresse AD sur une sortie connectée à une entrée de la mémoire 10. AD indique l'adresse de la zone Z1 où est contenue la valeur numérique à enregistrer. L'enregistrement est commandé par un signal R/W délivré par le processeur 16 sur une sortie connectée à une entrée de la mémoire 10.

Chaque nouvelle combinaison est déterminée lors de la lecture de la combinaison précédente.

Pour lire une combinaison enregistrée dans la zone Z1 de la mémoire 10, le compteur 18 est remis à zéro grâce à un signal RAZ délivré par le processeur 16 sur une sortie connectée à une entrée du compteur 18. Puis, le compteur 18 délivre le signal AD déterminant l'adresse de la valeur numérique à lire, A9A8 étant positionnés à 00.

La valeur numérique désignée est enregistrée par le registre 12. L'enregistrement est commandé par le processeur 16 qui délivre un signal de charge CH sur une sortie connectée à une entrée du registre 12. Le signal d'horloge CK délivré par le processeur 16 permet de synchroniser l'adressage et la lecture de la mémoire 10.

Lors de l'enregistement de la valeur numérique, le registre 12 effectue une comparaison entre la valeur numérique enregistrée et la valeur du code de fin T (étape 120, fig.2). En cas d'égalité, le registre 12 délivre un signal de fin de combinaison FDC sur une sortie connectée à une entrée du processeur 16. Le processeur 16 délivre un signal de remise à zéro RAZ du compteur 18 (étape 130, fig.2) et la lecture d'une nouvelle combinaison commence.

Si la valeur numérique enregistrée n'est pas égale au code de fin, celle-ci est disponible sous forme d'un signal de sortie VN sur une sortie du registre 12 et est utilisée par exemple par un système de simulation (non représenté). Le compteur 18 est ensuite incrémenté de façon à lire la valeur suivante de la combinaison et ainsi de suite jusqu'à trouver le code de fin T.

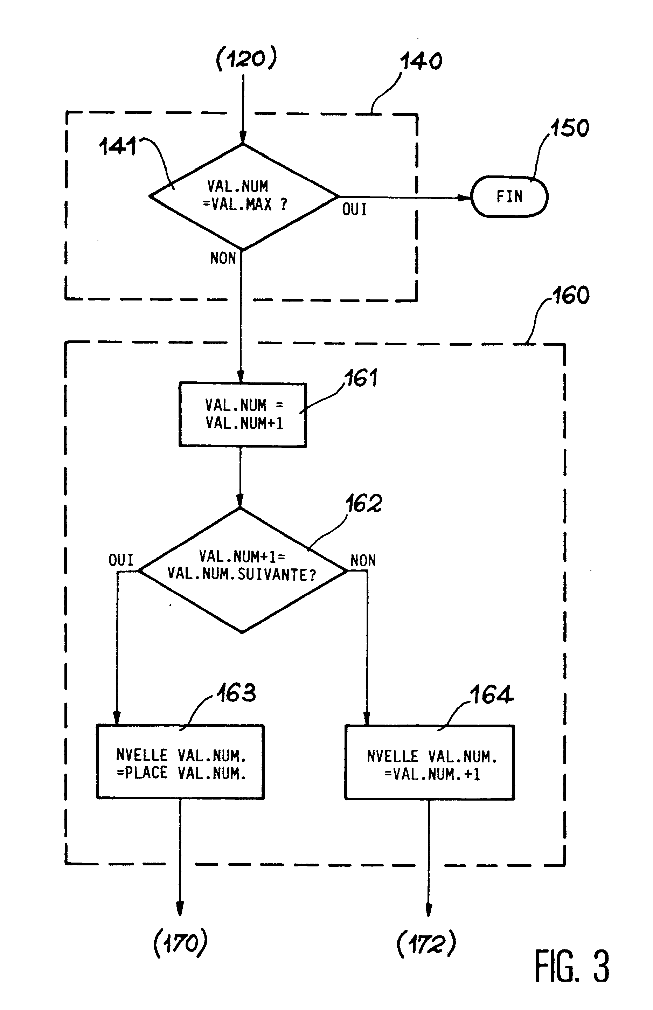

La détermination de la combinaison suivante est décrite en référence aux figures 1 et 3.

Pendant cette détermination d'une nouvelle valeur numérique, on teste un critère d'arrêt (étape 140). Ce test permet de déterminer si toutes les combinaisons à un ordre donné ont été engendrées et si oui de stopper la génération de combinaisons nouvelles. Ainsi, l'étape 140 est reliée à l'étape 150 de fin de génération.

La vérification du critère d'arrêt comporte l'étape 141. A l'étape 141, on compare la valeur numérique (VAL.NUM.) enregistrée dans le registre 12 à une valeur numérique maximum (VAL.MAX). Pour une utilisation de la combinaison à la simulation de défaillances, la valeur maximum est égale au nombre de composants du système complexe.

Pour effectuer la comparaison de l'étape 141, le processeur 16 commande la délivrance sur la sortie de la mémoire 10 de la valeur maximum enregistrée dans la zone Z3 (A9A8 sont égaux à 10) à l'adresse indiquée par le compteur 18.

Le comparateur 14 compare la valeur numérique disponible en sortie du registre 12 et celle disponible en sortie de la mémoire 10.

Si ces deux valeurs sont égales le comparateur 14 délivre un signal d'égalité Ram = Reg sur une sortie connectée à une entrée du processeur 16. Celui-ci commande alors la délivrance d'un signal qui indique que la génération de toutes les combinaisons possibles à l'ordre en cours a été exécutée.

Dans le cas où la valeur numérique n'est pas égale à la valeur maximum, on passe à l'étape 160 de déduction d'une nouvelle valeur numérique.

La détermination de la nouvelle valeur numérique est effectuée à partir de la comparaison entre la valeur numérique lue à l'étape 110, figure 2 et un élément de comparaison. Selon le critère de calcul adopté dans cette réalisation, plusieurs cas sont à prendre en considération.

L'élément de comparaison est égal à la valeur numérique occupant dans la zone Z1 l'adresse succédant à celle de la valeur numérique lue à l'étape 110. La comparaison entre ces deux valeurs permet de déterminer si elles sont consécutives ou non.

a) Les deux valeurs sont consécutives.

Dans ce cas, la nouvelle valeur numérique est égale au numéro de place occupée dans la zone Z1 par la valeur numérique lue à l'étape 110. On continue ensuite d'explorer les valeurs suivantes.

b) Les deux valeurs ne sont pas consécutives.

Dans ce cas, la nouvelle valeur numérique est égale à la valeur numérique lue à l'étape 110 augmentée de 1 et la nouvelle combinaison est prête, on n'explore pas les valeurs numériques suivantes.

Si la valeur numérique lue à l'étape 110 n'est pas égale à la valeur numérique maximum, auquel cas le critère d'arrêt de génération est satisfait, le processeur 16 délivre un signal d'incrémentation +1Reg qui permet d'augmenter de 1 la valeur contenue dans le registre 12 (étape 161, fig.3). Cette valeur augmentée de 1 est délivrée sur une sortie du registre 12 connectée à une entrée du comparateur 14.

Le processeur commande alors la délivrance sur une sortie de la mémoire 10 de la valeur numérique occupant l'adresse suivante en zone Z1 par une incrémentation du compteur 18. Cette sortie de la mémoire 10 est connectée à une deuxième entrée du comparateur 14. Celui-ci réalise l'étape 162 de comparaison entre les valeurs délivrées sur ses deux entrées de comparaison.

Dans le cas où elles sont égales, le comparateur 14 délivre un signal Ram = Reg sur une sortie connectée au processeur 16. Dans ce cas, le signal Ram = Reg indique au processeur 16 que les deux valeurs successives prises en compte sont consécutives. Le processeur 16 commande alors les opérations qui permettent d'égaler la nouvelle valeur numérique au numéro de place de la valeur lue à l'étape 110.

Pour cela, le processeur 16 commande la décrémentation du compteur 18 par un ordre -1ADR et égale A9A8 aux valeurs 01, ce qui a pour effet d'adresser la zone Z2 de la mémoire 10. Le processeur 16 commande la délivrance du numéro de place contenu à l'adresse désignée de la zone Z2 et son enregistrement dans le registre 12 (étape 163, fig.3).

A l'étape 170, la nouvelle valeur numérique est enregistrée à l'adresse de la valeur numérique lue à l'étape 110. Cette opération est commandée par le processeur 16.

Après l'enregistrement de la nouvelle valeur en zone Z1, la valeur suivante est lue et l'on reprend le cycle des étapes à partir de la référence 110.

Dans le cas où les valeurs comparées à l'étape 162 (figure 3) ne sont pas égales, le signal Ram = Reg n'est pas délivré. La nouvelle valeur qui est égale à la valeur numérique lue à l'étape 110 augmentée de 1 est disponible en sortie du registre 12. Le processeur commande la décrémentation du compteur 18 par un ordre -1ADR et porte A9A8 à 00 tout en envoyant un ordre d'écriture qui entraîne l'enregistrement de la valeur numérique lue plus un à la place de la valeur numérique lue (étapes 164, 172, fig.2, 3). La nouvelle combinaison est prête à partir de ce moment là : les valeurs numériques suivantes restent inchangées. Une étape d'exploitation de la nouvelle combinaison (étape 174, fig.2) précède la reprise des étapes à partir de la référence 110.

A titre d'exemple illustratif, on va commenter la lecture d'une combinaison 2,3,5 faisant partie des combinaisons possibles lorsque la valeur maximum est 5 et l'ordre p égale 3.

2 est la première valeur lue (étape 110, fig.2) ; elle occupe l'adresse 0 en zone Z1. 2 n'est pas égal au code de fin choisi égal à la plus grande valeur que peut contenir le registre 12, par exemple 4095 (étape 120, fig.2). 2 n'est pas non plus égal à la valeur maximum, 5 dans cet exemple (étape 140, fig.2). En conséquence, 2 est augmenté de 1, ce qui donne 3 (étape 161, fig.3). Cette dernière valeur est comparée à la valeur occupant l'adresse 1 en zone Z1 (étape 162, fig.3). Les deux valeurs sont égales, en effet 2 et 3 sont consécutifs.

Donc, le numéro de place 1 attribué à la valeur 2 est enregistré à l'adresse 0 de la zone Z1 (étapes 163, fig.3 et 170, fig.2).

De retour à l'étape 110, fig.2, la valeur occupant l'adresse 1 en zone Z1 est enregistrée : 3 est contenue dans le registre 12. 3 n'est pas égal au code de fin et ne vérifie pas le critère d'arrêt : cette valeur est augmentée de 1, ce qui donne 4 et est comparée à 5 valeur occupant l'adresse suivante en zone Z1.

4 n'est pas égal à 5, en effet 3 et 5 ne sont pas consécutifs. En conséquence, la valeur contenue dans le registre 12, c'est-à-dire 4, est enregistrée à l'adresse 1 de la zone Z1. Le processus s'arrête là.

La nouvelle combinaison est 1,4,5 par conséquent. On n'a pas touché à la valeur numérique 5.

Dans le cas où cinq valeurs sont combinées trois par trois, les combinaisons successives sont : 1,2,3 ; 1,2,4 ; 1,3,4 ; 2,3,4 ; 1,2,5 ; 1,3,5 ; 2,3,5 ; 1,4,5 ; 2,4,5 ; 3,4,5. La dernière combinaison est formée par les trois plus grandes valeurs possibles. Le critère d'arrêt est satisfait uniquement à la dernière combinaison. Il faut en effet que la valeur 5 soit chargée dans le registre pendant la détermination de la combinaison suivante pour que le processeur reconnaisse que le balayage est terminé. Et ceci n'est vérifié que lorsque la combinaison en cours est la dernière.

Par exemple, pour la combinaison 2,4,5 qui n'est pas la dernière, 2 est chargé dans le registre 12 et n'étant pas égal à la valeur maximum, il est ensuite comparé à la valeur suivante 4. Ces valeurs n'étant pas consécutives, on écrit 3 à la place de 2. La nouvelle combinaison est 3,4,5.

Puis, la combinaison suivante 3,4,5 est calculée. 3 n'étant pas égal à la valeur maximum, on le compare à 4. Les valeurs sont consécutives, on écrit donc 1 à la place de 3. Puis, on continue le processus en comparant 4 et 5. 4 n'étant pas égal à la valeur maximum, 4 et 5 étant consécutifs, on écrit 2 à la place de 4. Le processus continue. On passe à l'étude des deux valeurs suivantes : 5 et le code de fin T. 5 est chargé dans le registre et est d'abord comparé avec la valeur maximum. Etant donné que ces valeurs sont égales, le critère d'arrêt est vérifié. Le processeur est informé qu'il doit passer à des combinaisons d'un autre ordre.

Il va de soi que l'invention ne se limite nullement aux exemples de réalisation plus spécialement décrits et représentés ; elle en admet au contraire toutes les variantes. En particulier, les valeurs numériques peuvent éventuellement être classées dans un ordre décroissant, ou encore la combinaison initiale peut être réalisée par les p valeurs les plus grandes enregistrées dans l'ordre croissant ou non, p étant l'ordre de la combinaison. Evidemment, le critère de déduction de la combinaison suivant une combinaison en train d'être lue dépend de ces choix.

## Revendications

1. Dispositif pour la génération de combinaisons de valeurs numériques, caractérisé en ce qu'il comprend :
   - une première mémoire (10) apte à enregistrer des valeurs numériques rangées dans un ordre déterminé et un code de fin (T) à des adresses successives,
   - un moyen pour engendrer des numéros de place attribuées aux valeurs numériques,
   - des premiers moyens de comparaison (12, 14) aptes à comparer une valeur numérique lue en mémoire (10) avec au moins un élément de comparaison pour déduire une nouvelle valeur numérique et apte à délivrer cette nouvelle valeur sur une sortie connectée à la première mémoire (10) pour son écriture à l'adresse de la valeur lue,
   - des moyens de commande (16, 18) pour la commande des écritures en mémoire (10), pour un enregistrement dans la première mémoire (10) d'une combinaison initiale et pour la commande de la déduction de la nouvelle valeur numérique selon un critère de calcul déterminé.

2. Dispositif selon la revendication 1, caractérisé en ce que le moyen pour engendrer des numéros de place est une seconde mémoire comprenant des numéros de place enregistrés à des adresses successives, la succession de ces adresses correspondant à la succession des adresses des valeurs numériques en première mémoire (10).

3. Dispositif selon la revendication 2, caractérisé en ce que les valeurs numériques et le code de fin étant enregistrés dans une première zone (Z1) de la première mémoire (10), la seconde mémoire correspond à une seconde zone (Z2) de la première mémoire (10).

4. Dispositif selon la revendication 1, caractérisé en ce que les premiers moyens de comparaison comprennent :

un registre (12) apte à éventuellement incrémenter son contenu, ce registre (12) étant connecté par une sortie à une première entrée d'un comparateur (14) apte à comparer le contenu du registre (12) à un élément de comparaison delivré sur une seconde entrée du comparateur (14) et à délivrer un signal de comparaison (Ram=Reg) sur une sortie connectée à une entrée des moyens de commande (16, 18).

5. Dispositif selon la revendication 1, caractérisé en ce qu'un premier élément de comparaison est constitué par une valeur numérique maximum et un second élément de comparaison est constitué par une valeur numérique enregistrée en première mémoire (10) et ayant une adresse suivant cette de ladite valeur numérique lue.

6. Dispositif selon la revendication 5, caractérisé en ce qu'il comprend une troisième mémoire connectée par une sortie à une entrée des premiers moyens de comparaison (12, 14) et par des entrées à des sorties des moyens de commande (16, 18) et dans laquelle ladite valeur maximum est enregistrée à toutes les adresses.

7. Dispositif selon la revendication 6, caractérisé en ce que la troisième mémoire est une troisième zone (Z3) de la première mémoire (10).

8. Dispositif selon la revendication 1, caractérisé en ce qu'il comprend un second moyen de comparaison apte à comparer ladite valeur numérique lue audit code de fin et à delivrer sur une sortie connectée à une entrée des moyens de commande (16, 18) un signal de fin de combinaison (FDC).

9. Dispositif selon la revendication 8, caractérisé en ce que, les premiers moyens de comparaison comprenant un registre (12), ledit second moyen de comparaison est constitué par ce registre (12).

10. Dispositif selon la revendication 1, caractérisé en ce qu'il comporte un moyen de test d'un critère d'arrêt délivrant un signal d'arrêt pour l'arrêt de la génération de combinaisons.

11. Dispositif selon la revendication 1, caractérisé en ce que ladite combinaison initiale est composée des p premières valeurs numériques possibles, p étant l'ordre de la combinaison.

12. Dispositif selon la revendication 1, caractérisé en ce que lesdits moyens de commande comprennent un processeur (16) relié à un compteur (18).

13. Procédé pour la mise en oeuvre d'un dispositif conforme à la revendication 1, caractérisé en ce qu'il consiste à :

A - préalablement, enregistrer dans une mémoire des valeurs numériques formant une combinaison initiale et un code de fin marquant la fin de la combinaison, les valeurs numériques étant enregistrées dans un ordre déterminé à des adresses successives, des numéros de place en mémoire étant attribués aux valeurs numériques,

B - lire les valeurs numériques dans l'ordre des places successives,

C - à chaque lecture d'une valeur numérique,
a) déduire une nouvelle valeur numérique à partir du résultat d'une comparaison entre la valeur numérique lue et au moins un élément de comparaison,
b) enregistrer la nouvelle valeur numérique à l'adresse de la valeur numérique lue,

D - à partir de la combinaison formée par la suite des valeurs numériques déduites en C, reprendre en B pour la formation d'une combinaison suivante.

14. Procédé selon la revendication 13, caractérisé en ce que la nouvelle valeur numérique est déduite à partir d'une comparaison entre la valeur numérique lue et un élément de comparaison constitué par la valeur numérique enregistrée à l'adresse suivant cette de la valeur numérique lue,
1) si les valeurs comparées sont consécutives alors la nouvelle valeur numérique est égale à la place de la valeur numérique lue,
2) sinon la nouvelle valeur numérique est égale à la valeur numérique lue augmentée de 1.

15. Procédé selon la revendication 13, caractérisé en ce qu'on compare chaque valeur numérique lue à une valeur numérique maximum déterminée, si la valeur numérique lue est égale à la valeur numérique maximum, alors la génération de combinaisons est stoppée.

16. Procédé selon la revendication 13, caractérisé en ce que, à l'étape A, à chaque valeur numérique, on attribue un numéro de place de valeur égale à la valeur numérique considérée.

FIG. 1

FIG. 2

**100** — ECRITURE EN Z1 COMBINAISON INITIALE

**110** — DELIVRANCE VALEUR NUMERIQUE

**120** — VALEUR NUMERIQUE = CODE FIN ?
— OUI → **130** RAZ ADRESSE
— NON

**140** — CRITERE D'ARRET ?
— OUI → **150** FIN
— NON

**160** — DEDUCTION NOUVELLE VALEUR NUMERIQUE

VALEURS CONSECUTIVES → **170** ENREGISTREMENT NOUVELLE VALEUR NUMERIQUE

VALEURS NON CONSECUTIVES → **172** ENREGISTREMENT NOUVELLE VALEUR NUMERIQUE

**174** — EXPLOITATION DE LA COMBINAISON

FIG. 3

Office européen
des brevets

**RAPPORT DE RECHERCHE EUROPEENNE**

Numero de la demande

EP   91 40 1352

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-58 108 (COMMISSARIAT A L'ENERGIE ATOMIQUE) <br> * revendication 1; figure 1 * <br> --- | 1 | G01R31/318 <br> G06F7/38 <br> G07C3/00 |
| A | BIT <br> vol. 26, 1986, <br> pages 2 - 6; <br> CHAN ET AL: 'Generating combinations in parallel ' <br> * page 4, ligne 1 - page 6, ligne 7 * <br> ----- | 1 | |

**DOMAINES TECHNIQUES RECHERCHES (Int. Cl.5 )**

G06F

Le présent rapport a été établi pour toutes les revendications

| Lieu de la recherche | Date d'achèvement de la recherche | Examinateur |
|---|---|---|
| LA HAYE | 22 JUILLET 1991 | COHEN B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant